# EUROPÄISCHE PATENTSCHRIFT

(11) **EP 1 136 231 B1**
(45) Veröffentlichungstag und Bekanntmachung des Hinweises auf die Patenterteilung: **10.10.2007**
(21) Anmeldenummer: 01105903.7
(22) Anmeldetag: 09.03.2001
(51) Int. Cl.: B29C 65/02, B29C 65/08, B29C 65/06

(54) **Verbindungsanordnung zum Anbringen eines Befestigungselementes an einem Bauteil**
Connecting assembly for mouting fastening element on a building component
Dispositif de connexion pour monter un élément de fixation sur une pièce

(30) Priorität: 16.03.2000 DE 10012782
(43) Veröffentlichungstag der Anmeldung: 26.09.2001
(73) Patentinhaber: Böllhoff GmbH, 33649 Bielefeld (DE)
(72) Erfinder: Stumpf, Michael, Dipl.-Ing., 33611 Bielefeld (DE); Schulz, Detlef, Dipl.-Ing., 33604 Bielefeld (DE)
(74) Vertreter: Hauck Patent- und Rechtsanwälte

(56) Entgegenhaltungen:
- EP-A- 1 160 071
- DE-A- 19 639 197
- US-A- 5 879 115
- PATENT ABSTRACTS OF JAPAN vol. 015, no. 513 (M-1196), 26. Dezember 1991 (1991-12-26) & JP 03 226457 A (DAIFUKU CO LTD), 7. Oktober 1991 (1991-10-07)

## Beschreibung

Die Erfindung betrifft eine Verbindungsanordnung zum Anbringen eines Befestigungselementes aus thermoplastischem Kunststoff an einem Bauteil aus thermoplastischem Kunststoff in Form eines Gehäuses eines Mobiltelefons sowie ein Befestigungselement und ein Bauteil für eine derartige Verbindungsanordnung.

Es ist häufig erforderlich, an Bauteilen aus Kunststoff wie z.B. Kunststoffgehäusen Befestigungsmöglichkeiten vorzusehen, um an dem Bauteil beispielsweise ein anderes Teil anschrauben zu können. Hierzu ist es z.B. bereits bekannt geworden, Gewindeeinsätze aus einem härteren Kunststoff in eine entsprechende Bohrung des Bauteils einzupressen, beispielsweise durch Warmeinbetten, Ultraschallschweißen oder dgl. Dieses Verfahren scheidet jedoch bei dünnwandigen Bauteilen wie z.B. Gehäusen von Mobiltelefonen aus. Man könnte daran denken, entsprechende Gewindeansätze unmittelbar an dem Bauteil anzuformen. Dies ist jedoch nur bei Bauteilen sehr einfacher Geometrie möglich.

Aus US-A-5 879 115 ist eine Verbindungsanordnung zum Anbringen eines Befestigungselementes aus thermoplastischem Kunststoff an einem Bauteil aus thermoplastischem Kunststoff bekannt, bei der das Befestigungselement einen mit einem Funktionsbereich versehenen Hauptkörper und einen am Hauptkörper angeformten Fügevorsprung aufweist und das Bauteil mit einem an der Oberfläche angeformten Fügeansatz versehen ist, der eine Aufnahmeöffnung zur Aufnahme des Fügevorsprunges des Befestigungselementes hat. Bei dieser Verbindungsanordnung ist das Befestigungselement an seiner Außenfläche mit mehreren über den Umfang und in axialer Richtung verteilten Vorsprüngen versehen, die sich beim Fügevorgang mehr oder weniger tief in die Fügefläche des Fügeansatzes eingraben.

Aus PATENT ABSTRACT Of JAPAN, Bd. 015, Nr. 513 (M-1196) und JP 03 226457 A ist eine Verbindungsanordnung zum Anbringen eines Befestigungselementes aus thermoplastischem Kunststoff an einer Oberfläche eines Bauteils aus thermoplastischem Kunststoff bekannt, bei der das Befestigungselement durch Aufschmelzen mit einem Fügevorsprung des Bauteils verbunden wird. Bei dem Bauteil handelt es sich um eine Palette, und das Befestigungselement dient dazu, Stopper aus Gummi an der Palette zu befestigen, indem ein ringförmiger Vorsprung der Stopper zwischen einem Flansch des Befestigungselementes und der Stirnfläche des Fügevorsprungs eingespannt wird.

Eine Verbindungsanordnung mit einem Befestigungselement und Bauteil nach dem Oberbegriff des Patentanspruchs 1 ist aus DE 196 39 197 A1 bekannt.

Der Erfindung liegt die Aufgabe zugrunde, eine Verbindungsanordnung zum Anbringen eines Befestigungselementes aus thermoplastischem Kunststoff an einer Oberfläche eines dünnwandigen Bauteiles aus thermoplastischem Kunststoff in Form eines Gehäuses eines Mobiltelefons zu schaffen, bei der keine Bohrung in der Oberfläche des Bauteils erforderlich ist und dennoch das Befestigungselement nach Fertigstellung des Bauteils an diesem angebracht werden kann.

Die Erfindung sowie vorteilhafte Ausgestaltungen der Erfindung sind in den Ansprüchen definiert.

Bei der erfindungsgemäß ausgebildeten Verbindungsanordnung weist das Befestigungselement ein mit einem Funktionsbereich versehenen Hauptkörper und einen am Hauptkörper angeformten Fügevorsprung auf, und das Bauteil ist mit einem an der Oberfläche angeformten Fügeansatz versehen, der eine Aufnahmeöffnung zur Aufnahme des Fügevorsprungs des Befestigungselementes hat. Der Fügevorsprung und der Fügeansatz haben aufeinander abgestimmte Fügeflächen, die durch Aufschmelzen stoffschlüssig miteinander verbunden sind.

Hierdurch kann das Befestigungselement an der Oberfläche des Bauteils stoffschlüssig befestigt werden, ohne dass das Bauteil mit einer Bohrung versehen werden muss. Das Bauteil kann daher äußerst dünnwandig ausgebildet werden. Das Befestigungselement kann beispielsweise ein einfaches Spritzgussteil sein.

Zum stoffschlüssigen Verbinden des Befestigungselementes und des Bauteils kann ein herkömmliches Aufschmelzverfahren wie z.B. Ultraschallschweißen oder ein lineares oder rotierendes Reibschweißen verwendet werden. Das Befestigungselement und das Bauteil können aus demselben thermoplastischen Kunststoff oder aber aus unterschiedlichen, jedoch stofflich verträglichen Kunststoffen bestehen. Hierbei können teilkristalline oder auch amorphe thermoplastische Kunststoffe, gegebenenfalls mit üblichen Füllstoffen, zum Einsatz kommen.

Anhand der Zeichnungen wird ein bevorzugtes Ausführungsbeispiel der Erfindung näher erläutert. Es zeigt:
Fig. 1 eine perspektivische Ansicht eines Befestigungselementes und eines Abschnittes eines zugehörigen Bauteils vor dem Fügevorgang;
Fign. 2,3 Schnittansichten des Befestigungselementes und Bauteils in Fig. 1 vor dem Fügevorgang;
Fig. 4 eine den Fign. 2, 3 entsprechende Ansicht des Befestigungselementes und Bauteils nach dem Fügevorgang.

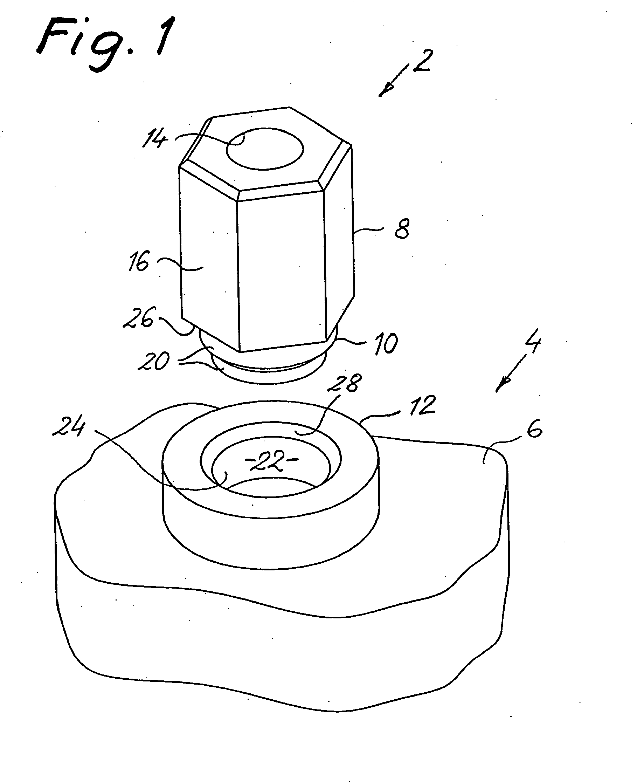

Die Fig. 1 zeigt ein Befestigungselement 2, das an der ebenen Oberfläche 6 eines Bauteils 4 angebracht werden soll. Bei dem Bauteil 4 handelt es sich um ein vergleichsweise dünnwandiges Teil in Form eines Gehäuses eines (im übrigen nicht dargestellten) Mobiltelefons. Das Befestigungselement 2 besteht aus einem Hauptkörper 8 und einem daran angeformten Fügevorsprung 10, der von einem an der Oberfläche 6 des Bauteils 4 angeformten Fügeansatz 12 aufgenommen werden kann.

Das Befestigungselement 2 hat einen Funktionsbereich 14, der beispielsweise aus einer glatten oder mit Gewinde versehenen Bohrung, einem Teil eines Verschlusses oder einer Schnapp- oder Rastverbindung oder einem ähnlichen Befestigungsmittel besteht. Wenn daher das Befestigungselement 2 an der Oberfläche 6 des Bauteils 4 angebracht ist, kann es eine entsprechende Befestigungsfunktion ausüben.

Der Fügevorsprung 10 des Befestigungselementes 2 und der Fügeansatz 12 des Bauteils 4 sind mit aufeinander abgestimmten Fügeflächen 22, 24 versehen, die durch einen Aufschmelzvorgang miteinander verbunden werden. Als Fügeverfahren kommt ein herkömmliches Aufschmelzverfahren wie z.B. Ultraschallschweißen, ein lineares oder rotierendes Reibschweißen (Vibrationsschweißen), ein Heizelementschweißen oder dgl. in Frage. Das Befestigungselement 2 und das Bauteil 4 bestehen jeweils aus einem thermoplastischen Kunststoff, um einen entsprechenden Fügevorgang zu ermöglichen. Hierbei können sie beide aus demselben Kunststoff oder aber aus unterschiedlichen, jedoch stofflich verträglichen Materialien bestehen.

Im dargestellten Ausführungsbeispiel sind die Fügeflächen 20, 24 rotationssymmetrisch ausgebildet. Genauer gesagt, ist der Fügevorsprung 10 als im wesentlichen kreiszylindrischer Zapfen ausgebildet, dessen Umfangsfläche als Fügefläche 20 dient. Der Fügeansatz 12 ist als kreiszylindrischer Ring mit einer Aufnahmeöffnung 22 ausgebildet, deren Umfangsfläche als Fügefläche 24 dient. Wie in den Figuren 1 bis 3 dargestellt, ist die Fügefläche 20 abgestuft, während die Fügefläche 24 glatt ist. Es versteht sich jedoch, daß statt dessen die Fügefläche 20 glatt und die Fügefläche 24 abgestuft ausgebildet sein könnte. Hierbei sind einfache oder auch mehrfache Abstufungen der Fügeflächen möglich. Statt zylindrisch könnten die Fügeflächen 20, 24 auch kegel- oder konusförmig ausgebildet werden.

Die Höhe und der Durchmesser der Fügeflächen 20, 24 sind so aufeinander abgestimmt, daß sich bei dem Fügevorgang eine einwandfreie Verbindung zwischen den Fügeflächen ergibt. Wie in den Figuren 1, 2 und 4 zu sehen ist, hat der Hauptkörper 8 des Befestigungselementes 2 einen größeren Außendurchmesser als der Fügevorsprung 10, so daß zwischen dem Hauptkörper 8 und dem Fügevorsprung 10 eine Anschlagfläche 26 vorhanden ist, die während des Fügevorgangs und danach an der Stirnfläche des Fügeansatzes 12 anliegt.

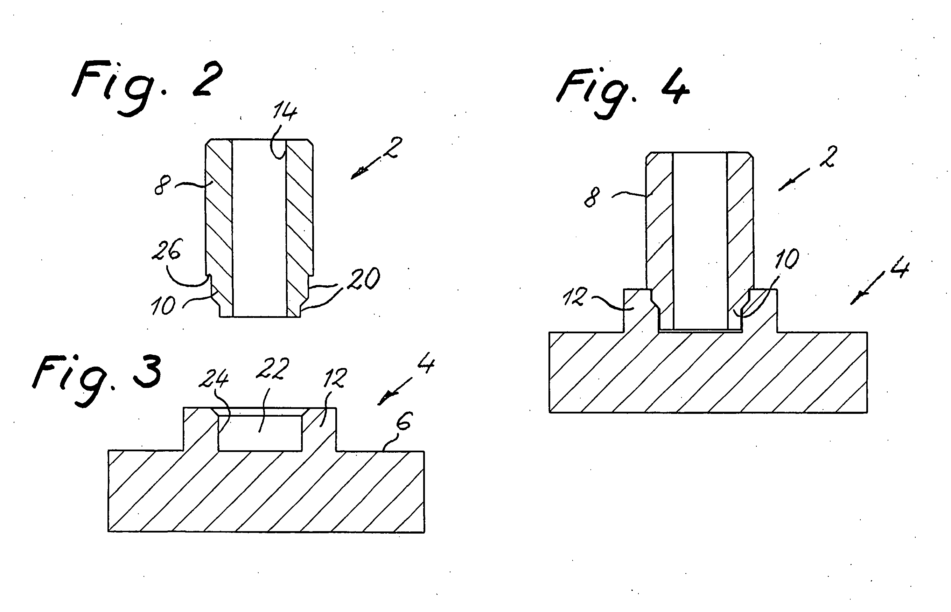

Wie in den Figuren 1 und 3 dargestellt, ist der Fügeansatz 12 im Bereich des freien Endes der Aufnahmeöffnung 22 mit einer Fase 28 versehen, die als Findehilfe zur Aufnahme des Fügevorsprungs 10 dient.

Die in Fig. 4 dargestellte Verbindungsanordnung zwischen dem Befestigungselement 2 und dem Bauteil 4 wird wie folgt hergestellt:

Zunächst werden das Befestigungselement 2 und das Bauteil 4 unabhängig voneinander hergestellt, beispielsweise durch Spritzgießen. Wie bereits erwähnt, kommen als Material für das Befestigungselement 2 und das Bauteil 4 thermoplastische Kunststoffe, gegebenenfalls mit Füllstoffen, zum Einsatz. Bei den thermoplastischen Kunststoffen kann es sich um teilkristalline oder auch amorphe Thermoplaste handeln.

Das Befestigungselement 2 wird nun mit seinem Fügevorsprung 10 in die Aufnahmeöffnung 22 des Fügeansatzes 12 des Bauteils 4 eingeführt. Durch Relativbewegungen zwischen den Fügeflächen 22 und 24 unter einer vorgegebenen Fügekraft werden die Fügeflächen 20, 24 so stark erwärmt, daß es zu einer Plastifizierung des Kunststoffes kommt. Hierauf werden die Relativbewegungen beendet, so daß die Schmelze erstarrt und eine stoffschlüssige Verbindung zwischen dem Befestigungselement 2 und dem Bauteil 4 im Bereich der Fügeflächen 20, 24 entsteht.

Die hierzu erforderlichen Relativbewegungen können zum Beispiel durch Ultraschall oder auch durch lineare oder rotierende Schwingungen (Reibschweißen) erzielt werden. Im Fall von rotierenden Schwingungen wird der Hauptkörper 8 des Befestigungselementes 2 an seinem Außenumfang zweckmäßigerweise mit einem Antriebsmittel 16 versehen, das im dargestellten Ausführungsbeispiel durch einen Mehrkant (Sechskant) verwirklicht ist. Statt dessen könnte jedoch ein anderer unrunder Querschnitt, eine Verzahnung, Profilierung oder irgendein anderes Antriebsmittel verwendet werden. Auch könnte das Antriebsmittel im Inneren des Hauptkörpers 8 vorgesehen werden, was allerdings zu vergrößerten Außenabmessungen des Hauptkörpers 8 führen würde. Es versteht sich, daß ein entsprechendes Antriebsmittel 16 bei einem Aufschmelzverfahren mit linearen Relativbewegungen (d.h. parallel zur Längsachse des Befestigungselementes 2) nicht erforderlich ist; der Hauptkörper 8 könnte dann mit einer zylindrischen oder anders geformten Außenfläche versehen werden.

## Patentansprüche

1. Verbindungsanordnung zum Anbringen eines Befestigungselementes (2) an einer Oberfläche (6) eines Bauteils (4) in Form eines Gehäuses eines Mobiltelefons, bei der
das Befestigungselement (2) einen mit einem Funktionsbereich (14) versehenen Hauptkörper (8) und einen am Hauptkörper (8) angeformten Fügevorsprung (10) aufweist und
das Bauteil (4) mit einem an der Oberfläche (6) angeformten Fügeansatz (12) versehen ist, der eine Aufnahmeöffnung (22) zur Aufnahme des Fügevorsprunges (10) des Befestigungselementes (2) hat,
wobei der Fügevorsprung (10) und der Fügeansatz (12) aufeinander abgestimmte Fügeflächen (20, 24) haben,
die Fügefläche (20) des Fügevorsprungs (10) vor dem Aufschmelzen glatt oder abgestuft und die darauf abgestimmte Fügefläche (24) des Fügeansatzes (12) vor dem Aufschmelzen abgestuft bzw. glatt sind, und
zwischen dem Hauptkörper (8) und dem Fügevorsprung (10) des Befestigungselementes (2) eine schulterartige Anschlagfläche (26) vorgesehen ist, die an der Stirnfläche des Fügeansatzes (12) anliegt,
**dadurch gekennzeichnet,**
**dass** das Bauteil (4) und das Befestigungselement (2) jeweils aus thermoplastischem Werkstoff bestehen,
**dass** die aufeinander abgestimmten Fügeflächen (20, 24) durch Aufschmelzen stoffschlüssig miteinander verbunden sind, und
**dass** der Hauptkörper (8) des Befestigungselementes (2) an seinem Außenumfang und/oder in seinem Inneren mit einem Antriebsmittel (16) zum Angreifen eines rotierenden Aufschmelzwerkzeuges versehen ist.

2. Verbindungsanordnung nach Anspruch 1, **dadurch gekennzeichnet, dass** das Befestigungselement (2) und das Bauteil (4) aus demselben Kunststoff oder aus unterschiedlichen, jedoch stofflich verträglichen Kunststoffen bestehen.

3. Verbindungsanordnung nach Anspruch 1 oder 2, **dadurch gekennzeichnet, dass** das Aufschmelzen der Fügeflächen (20, 24) durch Ultraschallschweißen, lineares oder rotierendes Reibschweißen oder einen anderen Warmschmelzvorgang erfolgt.

4. Verbindungsanordnung nach einem der vorhergehenden Ansprüche, **dadurch gekennzeichnet, dass** die Fügeflächen (20, 24) rotationssymmetrisch sind.

5. Verbindungsanordnung nach einem der vorhergehenden Ansprüche, **dadurch gekennzeichnet, dass** der Fügeansatz (12) des Bauteils (4) als im Wesentlichen kreiszylindrischer Ring ausgebildet ist.

6. Verbindungsanordnung nach einem der vorhergehenden Ansprüche, **dadurch gekennzeichnet, dass** der Fügevorsprung (10) des Befestigungselementes (2) als im Wesentlichen kreiszylindrischer Zapfen ausgebildet ist.

7. Verbindungsanordnung nach einem der vorhergehenden Ansprüche, **dadurch gekennzeichnet, dass** der Hauptkörper (8) des Befestigungselementes (2) als zapfenartiges Teil mit einer auf der Oberfläche (6) des Bauteils (4) senkrecht stehenden zentralen Längsachse ausgebildet ist.

8. Verbindungsanordnung nach einem der vorhergehenden Ansprüche, **dadurch gekennzeichnet, dass** der Funktionsbereich (14) des Befestigungselementes (2) eine glatte oder mit Gewinde versehene Bohrung, einen Teil eines Verschlusses oder einer Schnapp- oder Rastverbindung oder ein anderes Befestigungsmittel aufweist.

## Claims

1. A joining assembly for mounting a fastening element (2) to an external surface (6) of a structural member (4) in the form of a housing of a mobile telephone, wherein
the fastening element (2) comprises a main body (8) provided with a function area (14) and a joining projection integral with the main body (8) and
the structural member (4) is provided with a joining extension (12) integral with the external surface (6) and having a receiving opening (22) for receiving the joining projection (10) of the fastening element (2),
the joining projection (10) and said joining extension (12) have matingly shaped joining surfaces (20, 24),
the joining surface (20) of the joining projection (10) is smooth or stepped prior to the melting and the matingly shaped joining surface (24) of the joining extension (12) is stepped or, respectively, smooth prior to the melting, and
between the main body (8) and the joining projection (10) of the fastening element (2) there is a shoulder-like abutment surface (26) which engages the face of the joining extension (12),
**characterized in**
**that** the structural member (4) and the fastening element (2) each are made of thermoplastic material,
**that** the matingly shaped joining surfaces (20, 24) are integrally connected to each other by melting, and
**that** the main body (8) of the fastening element (2) is provided, at its outer periphery and/or within its interior, with a drive means (16) for driving a rotating melting tool.

2. Joining assembly according to claim 1, **characterized in that** the fastening element (2) and the structural member (4) are made of the same plastic material or of different plastic materials which however are compatible with each other.

3. Joining assembly according to claim 1 or 2, **characterized in that** melting of the joining surfaces (20, 24) is performed by ultrasonic welding, linear or rotating frictional welding, or another hot melting operation.

4. Joining assembly according to any of the preceding claims, **characterized in that** the joining surfaces (20, 24) are rotationally symmetrical.

5. Joining assembly according to any of the preceding claims, **characterized in that** the joining extension (12) of the structural member (4) is formed as a substantially cylindrical annulus.

6. Joining assembly according to any of the preceding claims, **characterized in that** the joining projection (10) of the fastening element (2) is formed as a substantially cylindrical trunnion.

7. Joining assembly according to any of the preceding claims, **characterized in that** the main body (8) of the fastening element (2) is formed as a trunnion-like member having a central longitudinal axis perpendicular to the external surface (6) of the structural member (4).

8. Joining assembly according to any of the preceding claims, **characterized in that** the function area (14) of the fastening element (2) comprises a smooth or tapped bore, a part of a closure or a snapping connection, or another fastening means.

## Revendications

1. Dispositif de connexion pour monter un élément de fixation (2) sur une surface (6) d'un composant (4) sous la forme d'un boîtier d'un téléphone mobile, dans lequel
l'élément de fixation (2) présente un corps principal (8) muni d'une zone fonctionnelle (14) et une saillie d'assemblage (10) formée sur le corps principal (8) et
le composant (4) est muni d'un appendice d'assemblage (12), formé sur la surface (6), qui a une ouverture de réception (22) pour recevoir la saillie d'assemblage (10) de l'élément de fixation (2),
la saillie d'assemblage (10) et l'appendice d'assemblage (12) ayant des aires d'assemblage (20, 24) adaptées mutuellement,
l'aire d'assemblage (20) de la saillie d'assemblage (10) étant, avant la fusion, lisse ou étagée, et l'aire d'assemblage (24) de l'appendice d'assemblage (12) qui lui est adaptée étant, avant la fusion, étagée ou lisse, et
une aire de butée (26) en forme d'épaulement étant prévue, entre le corps principal (8) et la saillie d'assemblage (10) de l'élément de fixation (2), qui appuie contre l'aire frontale de l'appendice d'assemblage (12),
**caractérisé en ce que**
le composant (4) et l'élément de fixation (2) se composent respectivement d'une matière thermoplastique,
**en ce que** les aires d'assemblage (20, 24) adaptées mutuellement sont raccordées mutuellement par adhérence par fusion, et
**en ce que** le corps principal (8) de l'élément de fixation (2) est, sur sa circonférence extérieure et/ou dans son intérieur, muni d'un moyen d'entraînement (16) pour agripper un outil de fusion rotatif.

2. Dispositif de connexion selon la revendication 1, **caractérisé en ce que** l'élément de fixation (2) et le composant (4) sont réalisés avec la même matière plastique ou avec des matières plastiques différentes mais compatibles au plan des matériaux.

3. Dispositif de connexion selon la revendication 1 ou 2, **caractérisé en ce que** la fusion des aires d'assemblage (20, 24) est effectuée par soudage par ultrasons, par soudage par friction linéaire ou rotatif ou par un autre processus de fusion à chaud.

4. Dispositif de connexion selon une des revendications précédentes, **caractérisé en ce que** les aires d'assemblage (20, 24) sont symétriques en rotation.

5. Dispositif de connexion selon une des revendications précédentes, **caractérisé en ce que** l'appendice d'assemblage (12) du composant (4) est constitué essentiellement en tant qu'anneau cylindrique circulaire.

6. Dispositif de connexion selon une des revendications précédentes, **caractérisé en ce que** la saillie d'assemblage (10) de l'élément de fixation (2) est constituée essentiellement en tant que tourillon cylindrique circulaire.

7. Dispositif de connexion selon une des revendications précédentes, **caractérisé en ce que** le corps principal (8) de l'élément de fixation (2) est constitué en tant que partie de type tourillon avec un axe longitudinal central placé perpendiculairement sur la surface (6) du composant (4).

8. Dispositif de connexion selon une des revendications précédentes, **caractérisé en ce que** la zone fonctionnelle (14) de l'élément de fixation (2) présente un alésage lisse ou muni d'un filet, une partie d'une fermeture ou d'un raccordement à déclic ou à cran, ou un autre moyen de fixation.
